# EUROPEAN PATENT APPLICATION

(11) **EP 1 862 508 A1**
(43) Date of publication of application: **05.12.2007**
(21) Application number: 06730346.1
(22) Date of filing: 22.03.2006
(51) Int. Cl.: C08L 77/00, C08K 3/34, F02M 37/00, B60K 15/03

(54) **MATERIAL FOR FUEL SYSTEM COMPONENTS**

(30) Priority: 24.03.2005 JP 2005085399
(71) Applicant: Ube Industries, Ltd., Ube-shi, Yamaguchi-ken 755-8633 (JP)
(72) Inventor: KOYASHIKI, Keiichiro c/o Ube Research Laboratory, Ube Industries, Ltd., Yamaguchi 7558633 (JP); MURAKAMI, Taizou c/o Ube Research Laboratory, Ube Industries, Ltd., Yamaguchi 7558633 (JP); MATSUDOMI, Yutaka c/o Ube Research Laboratory, Ube Industries, Ltd., Yamaguchi 7558633 (JP)
(74) Representative: Wössner, Gottfried
(86) International application number: PCT/JP2006/306398
(87) International publication number: WO 2006/101256

(57) **Abstract**

A material for fuel system parts is provided, which is excellent in alcohol gasoline permeation-preventing property and impact resistance and suitably usable for the parts attached to a fuel tank or a fuel hose. A material for fuel system parts, comprising a polyamide resin composition which comprises (A) a polyamide resin, (B) a layered silicate, (C) a polyolefin and (D) an impact resistant material and in which (A) the polyamide resin having dispersed therein (B) the layered silicate forms a matrix phase and at the same time, a dispersion phase of a core-shell particle structure with the core being (C) the polyolefin and the shell being (D) the impact resistant material is present in the matrix.

## Description

### TECHNICAL FIELD

The present invention relates to a material for fuel system parts of an internal combustion engine using gasoline as a fuel, for example, in automobiles or general-purpose engines. More specifically, the present invention relates to a material for fuel system parts, which is excellent in the alcohol gasoline (alcohol fuel) permeation-preventing property and impact resistance and suitably usable for the parts attached to a fuel tank or a fuel hose.

### BACKGROUND ART

Polyamide resin is widely used as an injection molding material particularly for parts of automobiles, electric products and the like, because the resulting molded articles have excellent mechanical properties.

However, polyamide resin lacks a sufficiently high gasoline permeation-preventing property, and therefore, a technique of blending a layered silicate in the polyamide resin to enhance the gasoline permeation-preventing property and enable application to molded articles for fuel tanks and the like, has been proposed (see, for example, Japanese Unexamined Patent Publication (Kokai) No. 2000-313749).

With the recent introduction of alcohol gasoline, which is a bio-alcohol, as an alternative fuel, the regulation of emissions produced by the precombustion of fuel in an internal combustion engine into the atmosphere, is becoming more strict, and the material used to produce fuel system parts must have enhanced alcohol gasoline permeation-preventing properties.

In order to solve such a problem, a technique of superposing a plurality of resin layers differing in the fuel permeation-preventing property to satisfy the regulation or blending EVOH in the polyamide resin to enhance the fuel permeation-preventing property has been proposed (see, for example, Japanese Examined Patent Publication (Kokoku) No. 7-39540).

However, the method of superposing a plurality of resin layers differing in the fuel permeation-preventing property has a problem that the process of producing the molded article is cumbersome or fully satisfying fuel permeation-preventing property cannot be obtained yet.

The method of blending EVOH in a polyamide resin has a problem in which gel or fish eye occurs during blending.

On the other hand, when a strong impact is added to the fuel system part in use and cracking or the like is generated therein, this induces fuel leakage. Therefore, impact resistance is also strongly required of the material for fuel system parts.

However, when impact resistance is improved by the conventional polymer alloying technique, there arises a problem in that the fuel permeation-preventing property decreases.

An object of the present invention is to solve these problems and provide a material for fuel system parts, which is excellent in the alcohol gasoline permeation-preventing property and impact resistance and suitable for the parts attached to a fuel tank or fuel hose.

### DISCLOSURE OF THE INVENTION

The present inventors found that when a polyolefin and an impact resistant material are mixed to form a dispersion phase of a core-shell particle structure in a polyamide resin having blended therein a layered silicate, a material for fuel system parts excellent in alcohol gasoline permeation-preventing property and impact resistance can be obtained. The present invention has been accomplished based on this finding.

The present invention is (1) a material for fuel system parts, comprising a polyamide resin composition which comprises (A) a polyamide resin, (B) a layered silicate, (C) a polyolefin and (D) an impact resistant material in which (A) the polyamide resin having dispersed therein (B) the layered silicate forms a matrix phase and at the same time, a dispersion phase of a core-shell particle structure with the core being (C) the polyolefin and the shell being (D) the impact resistant material is present in the matrix.

In addition, the present invention provides the following characteristic features.
(2) The material for fuel system parts as described in (1), wherein the total content of (A) the polyamide resin and (B) the layered silicate is from 85 to 45 wt%, the content of (C) the polyolefin is from 5 to 20 wt%, and the content of (D) the impact resistant material is from 10 to 35 wt%, based on the entire polyamide resin composition.
(3) The material for fuel system parts as described in (1), wherein the content of (B) the layered silicate is from 0.05 to 10 wt% based on the total of (A) the polyamide resin and (B) the layered silicate.
(4) The material for fuel system parts as described in (1), wherein (B) the layered silicate is uniformly dispersed in (A) the polyamide resin.
(5) The material for fuel system parts as described in (1), wherein (A) the polyamide resin is at least one member selected from polyamide 6 resin, polyamide 6/66 resin and polyamide 12 resin.
(6) The material for fuel system parts as described in (1), wherein (A) the polyamide resin is a blend of polyamide 6 resin and polyamide 6/66 resin.
(7) The material for fuel system parts as described in (1), wherein (C) the polyolefin is a polyethylene or a polypropylene.
(8) The material for fuel system parts as described in (1), wherein (C) the polyolefin is a high-density polyethylene.
(9) The material for fuel system parts as described in (1), wherein (D) the impact resistant material is an acid-modified ethylene·α-olefin copolymer.
(10) The material for fuel system parts as described in (1), wherein the fuel system part is a part attached to a fuel tank or hose.
(11) The material for fuel system parts as described in (1), wherein the fuel is an automobile fuel.
(12) A fuel system part using the material for fuel system parts described in (1) to (9).

The material for fuel system parts of the present invention is excellent in the alcohol gasoline permeation-preventing property and impact resistance and suitably usable for the parts attached to a fuel tank or a fuel hose.

### BRIEF DESCRIPTION OF THE DRAWINGS

Fig. 1A is a view showing the alcohol gasoline permeability of a polyamide resin.
Fig. 1B is a view showing the alcohol gasoline permeability when an impact resistant material is blended in the polyamide resin.
Fig. 2 is a view showing the alcohol gasoline permeability of a polyamide resin composition where a dispersion phase of a core-shell particle structure with the core being a polyolefin and the shell being an impact resistant material is present.
Fig. 3 is a drawing-substituting electron micrograph showing the results when the cross-section of the specimen obtained in Example 1 of the present invention is etched with xylene and subjected to cross-sectional observation through an electron microscope.

### BEST MODE FOR CARRYING OUT THE INVENTION

A material for fuel system parts of the present invention comprises a polyamide resin composition comprising (A) a polyamide resin, (B) a layered silicate, (C) a polyolefin and (D) an impact resistant material, in which (A) the polyamide resin having dispersed therein (B) the layered silicate forms a matrix phase and at the same time, a dispersion phase of a core-shell particle structure with the core being (C) the polyolefin and the shell being (D) the impact resistant material is present in the matrix.

The polyamide resin as the component (A) constituting the material for fuel system parts of the present invention is a polymer having an acid amide bond (-CONH-) polymerized from, as the monomer, a lactam, an aminocarboxylic acid, or a diamine and a dicarboxylic acid.

Specific examples of the lactam include α-pyrrolidone, α-piperidone, ε-caprolactam, ω-laurolactam, ε-enantholactam, undecanelactam and dodecalactam, and specific examples of the aminocarboxylic acid include 6-aminocaproic acid, 7-aminoheptanoic acid, 9-aminononanoic acid, 11-aminoundecanoic acid and 12-aminododecanoic acid.

Specific examples of the diamine include tetramethylenediamine, hexamethylenediamine, octamethylenediamine, nonamethylenediamine, undecamethylenediamine, dodecamethylenediamine and metaxylylenediamine.

Specific examples of the dicarboxylic acid include adipic acid, heptanedicarboxylic acid, octanedicarboxylic acid, nonanedicarboxylic acid, undecanedicarboxylic acid, dodecanedicarboxylic acid, sebacic acid, terephthalic acid, isophthalic acid and naphthalenedicarboxylic acid.

Specific examples of the polyamide resin formed from such monomer components include PA6, PA66, PA11 and PA12, and these polymers may be a homopolymer or a copolymer of two or more monomer components.

The polyamide resin may be used alone or may be used in the form of a mixture with a polyamide resin polymerized from a different monomer.

The polyamide resin is preferably a polyamide 6 resin (PA6), a polyamide 6/66 resin (PA6/66) or a polyamide 12 resin (PA12), more preferably a blend of polyamide 6 resin and polyamide 6/66 resin.

The polymerization degree of (A) the polyamide resin for use in the present invention is not particularly limited, but when 1g of the polymer is dissolved in 100 ml of 96% concentrated sulfuric acid and the solution is measured at 25°C, the relative viscosity is preferably from 1.8 to 5.0, more preferably from 2.0 to 4.5. If the relative viscosity exceeds the upper limit of this range, the processability is seriously impaired, whereas if it is less than the lower limit, the mechanical strength disadvantageously decreases.

In the present invention, (A) the polyamide resin may be mixed with other polymer resins. Examples of the other polymer resin include ABS resin, polyphenylene oxide, polycarbonate, polyethylene terephthalate and polybutylene terephthalate. In the case of using (A) the polyamide resin as a mixture with other polymer resins, the polyamide resin content is preferably 60 wt% or more.

The component (B) for use in the present invention is a layered silicate. This component (B) contributes to imparting excellent fuel permeation-preventing property to the material for fuel system parts.

The layered silicate used as the component (B) has a tabular shape and has a one-side length of 0.002 to 1 µm and a thickness of 6 to 20 Å. Also, the layered silicate when dispersed in the component (A) preferably causes uniform dispersion of tabular particles while keeping each interlayer distance of 20 Å or more on average. The term "interlayer distance" as used herein means a distance between gravitational centers of layered silicate particles having a tabular shape, and the term "uniform dispersion" means that the tabular particles in the form of individual sheets or multilayer materials consisting of five layers or less on average are present in the parallel and/or random state and 50 wt% or more, preferably 70 wt% or more, of the layered silicate particles are dispersed without locally forming a mass.

Examples of the raw material for such a layered silicate include a layered phyllosilicate mineral composed of a magnesium silicate or aluminum silicate layer. Specific examples thereof include smectite-type clay minerals such as montmorillonite, saponite, beidellite, nontronite, hectorite and stevensite, vermiculite, and halloysite. These may be a natural product or may be synthesized.

The proportion of the layered silicate is preferably from 0.05 to 10 wt%, more preferably from 0.2 to 5 wt%, based on the total of the polyamide resin as the component (A) and the layered silicate as the component (B). If the proportion of the layered silicate is less than 0.05 wt%, the fuel permeation-preventing property is insufficient, whereas if it exceeds 10 wt%, it reduces the physical properties, particularly the impact strength of the polymer.

The component (C) for use in the present invention is a polyolefin. This component (C) contributes to imparting excellent alcohol permeation-preventing property to the material for fuel system parts. Examples of (C) the polyolefin include a polymer of an α-olefin such as ethylene, propylene, 1-butene, 4-methyl-1-pentene and 1-hexene, and a block or random copolymer thereof. Among these polymers, those having high crystallinity are preferred in view of alcohol permeation-preventing property. Specifically, polyethylene and polypropylene are preferred, and high-density polyethylene is more preferred.

The proportion of (C) the polyolefin is preferably from 5 to 20 wt%, more preferably from 5 to 15 wt%, based on the entire polyamide resin composition. If the proportion of the polyolefin is less than 5 wt%, the alcohol permeation-preventing property decreases, whereas if it exceeds 20 wt%, this disadvantageously incurs reduction in the impact strength.

The component (D) for use in the present invention is an impact resistant material.

As for (D) the impact resistant material, a rubbery polymer may be used, and the flexural modulus measured according to ASTM D-790 is preferably 500 MPa or less. If the flexural modulus exceeds this value, insufficient impact-improving effect may result.

Examples of (D) the impact resistant material include an (ethylene and/or propylene)/α-olefin-based copolymer, an (ethylene and/or propylene)/(α,β-unsaturated carboxylic acid and/or unsaturated carboxylic acid ester)-based copolymer, an ionomeric polymer, and an aromatic vinyl compound/conjugated diene compound-based block copolymer. One species or two or more species of these material may be used. Among these, an ethylene·α-olefin-based copolymer is preferred.

The (ethylene and/or pxopylene)/α-olefin-based copolymer is a polymer obtained by copolymerizing ethylene and/or propylene with an α-olefin having a carbon number of 3 or more. Examples of the α-olefin having a carbon number of 3 or more include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. One species or two or more species thereof may be used.

Also, a polyene of a non-conjugated diene such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene and 2-propenyl-2,5-norbornadiene, may be copolymerized. One species or two or more species thereof may be used.

The (ethylene and/or propylene)/(α,β-unsaturated carboxylic acid and/or unsaturated carboxylic acid ester)-based copolymer is a polymer obtained by copolymerizing ethylene and/or propylene with an α,β-unsaturated carboxylic acid and/or unsaturated carboxylic acid ester monomer. Examples of the α,β-unsaturated carboxylic acid monomer include an acrylic acid and a methacrylic acid, and examples of the α,β-unsaturated carboxylic acid ester monomer include a methyl ester, an ethyl ester, a propyl ester, a butyl ester, a pentyl ester, a hexyl ester, a heptyl ester, an octyl ester, a nonyl ester and a decyl ester, of those unsaturated carboxylic acids. One species or two or more species thereof may be used.

The ionomeric polymer is a copolymer of an olefin and an α,β-unsaturated carboxylic acid, where at least a part of the carboxyl group is ionized by the neutralization of a metal ion. The olefin is preferably ethylene and the α,β-unsaturated carboxylic acid is preferably an acrylic acid or a methacrylic acid. However, the ionomeric polymer is not limited thereto, and an unsaturated carboxylic acid ester monomer may be copolymerized. Examples of the metal ion include an alkali metal and an alkaline earth metal, such as Li, Na, K, Mg, Ca, Sr and Ba, and further includes Al, Sn, Sb, Ti, Mu, Fe, Ni, Cu, Zn and Cd. One species or two or more species thereof may be used.

The aromatic vinyl compound/conjugated diene compound-based block copolymer is a block copolymer consisting of an aromatic vinyl compound-based polymer block and a conjugated diene compound-based polymer block. A block copolymer having at least one aromatic vinyl compound-based polymer block and at least one conjugated diene compound-based polymer block is used. In this block copolymer, an unsaturated bond in the conjugated diene compound-based polymer block may be hydrogenated.

The aromatic vinyl compound-based polymer block is a polymer block mainly comprising a structural unit derived from an aromatic vinyl compound. Examples of the aromatic vinyl compound include styrene, α-methylstyrene, o-methylstyrene, m-methylstyrene, p-methylstyrene, 1,5-dimethylstyrene, 2,4-dimethylstyrene, vinylnaphthalene, vinylanthracene, 4-propylstyrene, 4-cyclohexylstyrene, 4-dodecylstyrene, 2-ethyl-4-benzylstyrene and 4-(phenylbutyl)styrene. One species or two or more species thereof may be used. The aromatic vinyl compound-based polymer block may have a small amount of a structural unit comprising other unsaturated monomers.

The conjugated diene compound-based polymer block is a polymer block formed from one species or two or more species of conjugated diene compounds such as 1,3-butadiene, chloroprene, isoprene, 2,3-dimethyl-1,3-butadiene, 1,3-pentadiene, 4-methyl-1,3-pentadiene and 1,3-hexadiene. In the hydrogenated aromatic vinyl compound/conjugated diene compound-based block copolymer, the unsaturated bond moiety in the conjugated diene compound-based polymer block is partially or entirely hydrogenated to form a saturated bond.

The molecular structure of the aromatic vinyl compound/conjugated diene compound-based block copolymer or a hydrogenated product thereof may be linear, branched or radial or may be an arbitrary combination thereof. In particular, one species or two or more species selected from a diblock copolymer where one aromatic vinyl compound-based polymer block and one conjugated diene compound-based polymer block are linearly bonded, a triblock copolymer where three polymer blocks are linearly bonded in the order of aromatic vinyl compound-based polymer block - conjugated diene compound-based polymer block - aromatic vinyl compound-based polymer block, and a hydrogenated product thereof are used as the aromatic vinyl compound/conjugated diene compound-based block copolymer and/or a hydrogenated product thereof. Examples thereof include a styrene/ethylene-butene/styrene block copolymer (SEBS), a styrene/butadiene/styrene block copolymer (SBS), a styrene/isoprene/styrene block copolymer (SIS), and a styrene/ethylene-propylene/styrene block copolymer (SEPS).

The (ethylene and/or propylene)/α-olefin-based copolymer, (ethylene and/or propylene)/(α,β-unsaturated carboxylic acid and/or unsaturated carboxylic acid ester)-based copolymer, ionomeric polymer, and aromatic vinyl compound/conjugated diene compound-based block copolymer, which are used as (D) the impact resistant material, are preferably a polymer modified with a carboxylic acid and/or a derivative thereof. By the modification with such an acid, a functional group having affinity for (A) the polyamide resin is incorporated into the polymer molecule.

The add-on amount of the carboxylic acid and/or a derivative thereof is preferably from 0.1 to 10 wt%, more preferably from 0.5 to 5.0 wt%, based on the weight of the copolymer above. If the add-on amount is less than 0.1 wt%, poor compatibility with the polyamide resin and less enhancement of the impact resistance may result and this is not preferred, whereas even if it exceeds 10 wt%, the effect of enhancing the impact resistance is saturated and the productivity disadvantageously changes for the worse.

Examples of the functional group having affinity for (A) the polyamide resin include a carboxylic acid group, an acid anhydride group, a carboxylic acid ester group, a metal salt of carboxylic acid, a carboxylic acid imide group, a carboxylic acid amide group and an epoxy group. Examples of the compound containing such a functional group include an acrylic acid, a methacrylic acid, a maleic acid, a fumaric acid, an itaconic acid, a crotonic acid, a mesaconic acid, a citraconic acid, a glutaconic acid, a cis-4-cyclohexene-1,2-dicarboxylic acid, an endo-bicycla[2.2.1]-5-heptene-2,3-dicarboxylic acid, a metal salt of such carboxylic acid, a monomethyl maleate, a monomethyl itaconate, a methyl acrylate, an ethyl acrylate, a butyl acrylate, a 2-ethylhexyl acrylate, a hydroxyethyl acrylate, a methyl methacrylate, a 2-ethylhexyl methacrylate, a hydroxyethyl methacrylate, an aminoethyl methacrylate, a dimethyl maleate, a dimethyl itaconate, a maleic anhydride, an itaconic anhydride, a citraconic anhydride, an endo-bicyclo-[2.2.1]-5-heptene-2,3-dicarboxylic anhydride, a maleimide, an N-ethylmaleimide, an N-butylmaleimide, an N-phenylmaleimide, an acrylamide, a methacrylamide, a glycidyl acrylate, a glycidyl methacrylate, a glycidyl ethacrylate, a glycidyl itaconate and a glycidyl citraconate. One species or two or more species thereof may be used. Among these, a maleic anhydride is preferred.

The blending ratio of (D) the impact resistant material is preferably from 10 to 35 wt%, more preferably from 15 to 25 wt%, based on the entire polyamide resin composition.

If the blending amount of (D) the impact resistant material is less than 10 wt%, impact resistance is not satisfactorily enhanced, whereas if it exceeds 35 wt%, this may reduce fuel permeation-preventing performance.

In the material for molded articles of the present invention, a functionality-imparting agent and the like, such as dye, pigment, fibrous reinforcing material, particulate reinforcing material, plasticizer, heat resistant material, foaming agent, weathering agent, crystal nucleating agent, crystallization accelerator, release agent, lubricant, antistatic agent, flame retardant, flame retardant aid and colorant, may be appropriately blended according to the purpose.

In the material for fuel system parts of the present invention, (A) the polyamide resin forms the matrix phase, whereas the dispersion phase formed by (C) the polyolefin and (D) the impact resistant material provides a composite particle-type dispersion structure where the particle has a core-shell structure. In the core-shell structure, (D) the impact resistant material forms the shell phase and (C) the polyolefin forms the core phase, whereby the impact resistance can be improved without increasing the volume fraction of the impact resistant material component which decreases the fuel permeation-preventing property. In combination therewith, by virtue of excellent alcohol permeation-preventing property of (C) the polyolefin forming the core, a resin composition excellent in the alcohol gasoline permeation-preventing property can be obtained.

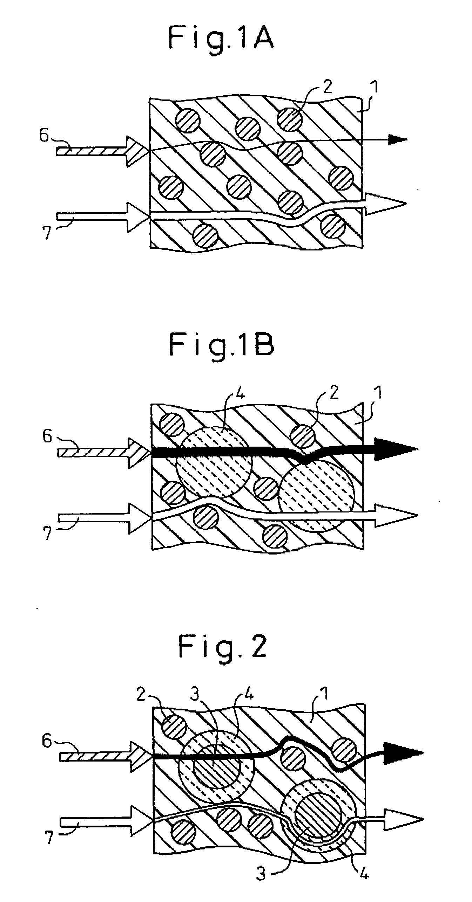

By referring to the drawings, (A) a polyamide resin 1 has some permeation-pteventing property for gasoline 6, but the permeation-preventing property for alcohol 7 is low (Fig. 1A). In the Figure, a layered silicate 2 is uniformly dispersed in the polyamide resin 1, and the layered silicate 2 has a given contribution to the alcohol gasoline permeation-preventing property. The large width of the arrow showing the flow of gasoline 6 or alcohol 7 indicates that the permeability is higher (hereinafter the same). When (D) an impact resistant material 4 is added to (A) the polyamide resin 1, the permeability of gasoline 6 increases and in turn, the alcohol gasoline permeation-preventing property is low (Fig. 1B). However, (C) a polyolefin 3 has an alcohol permeation-preventing property and therefore, when (D) the impact resistant material 4 forms the shell phase and (C) the polyolefin 3 forms the core phase, a bypass effect of causing alcohol 7 and gasoline 6 to avoid the core phase and pass the shell phase is obtained. As a result, in comparison with the case of blending only (D) the impact resistant material 4, the permeation-preventing property for alcohol 7 and gasoline 6 (alcohol gasoline fuel) is improved (Fig. 2). Also, by virtue of (D) the impact resistant material 4 forming the shell phase and (C) the polyolefin 3 forming the core phase, the gap y not allowing the presence of (D) the impact resistance material 4, that is, the width y of the region allowing the presence of only (A) the polyamide resin 1, can be reduced without increasing the volume fraction of (D) the impact resistant material 4, so that the impact resistance can be more enhanced (Fig. 2).

The polyamide resin composition in the material for fuel system parts of the present invention takes a form that (B) a layered silicate is dispersed in (A) a polyamide resin, and this can be achieved by kneading these two components.

Also, the polyamide resin composition in the material for fuel system parts of the present invention takes a form that a composite particle-type dispersion structure with the particle having a core-shell structure is provided in (A) the polyamide resin matrix by (C) the polyolefin and (D) the impact resistant material. This composite particle-type dispersion structure where (A) the polyamide resin forms the matrix phase and a core-shell structure is formed by (C) the polyolefin and (D) the impact resistant material, can be realized by kneading (D) the impact resistant material having high, affinity for (A) the polyamide resin and (C) the polyolefin having low affinity for (A) the polyamide resin. In other words, the composite particle-type dispersion structure can be realized by the interfacial tension relationship among the (A) polyamide resin, (C) polyolefin and (D) impact resistant material.

In a preferred embodiment of the present invention, the above-described polymer having introduced thereinto a functional group having affinity for the polyamide resin, more preferably, the polymer modified with an acid, is used as (D) the impact resistant material, and an unmodified polyolefin is used as (C) the polyolefin, whereby the composite particle-type dispersion structure can be realized. These materials may be melt-mixed at the same time. When the polyamide resin, polyolefin and acid-modified impact resistant material are melt-mixed at the same time, the acid-modified impact resistant material having high affinity for the matrix is grafted to the polyamide resin and becomes a shell and the polyolefin having low affinity becomes a core. Similarly, the present applicant (assignee) has previously found that when an acid-modified polyolefin having high affinity for the matrix is used and combined with an unmodified impact resistant material, the modified polyolefin is grafted to the polyamide resin and becomes a shell to provide a core-shell structure with the core being the impact resistant material.

The production method of the material for fuel system parts of the present invention is not particularly limited, and the following method may be applied.
(A) A polyamide resin having uniformly dispersed therein a layered silicate as the component (B) is previously produced and subsequently, (C) a polyolefin and (D) an impact resistant material are mixed therewith.

As for the method of producing (A) a polyamide resin having uniformly dispersed therein a layered silicate as the component (B), in the case where the layered silicate as the component (B) is a multilayer clay mineral, the layered silicate can be uniformly dispersed by performing the polymerization after previously contacting the clay mineral with a swelling agent such as amine (e.g., dioctadecylamine, phenylenediamine), amino acid (e.g., 4-amino-n-butyric acid, 12-aminododecanoic acid) or lactams (e.g., ε-caprolactam) to expand the interlayer distance and facilitate the intercalation of the monomer between layers. Furthermore, a method of previously expanding the interlayer distance to 20 Å or more by using a swelling agent, and then melt-mixing the resulting layered silicate with a polyamide resin, thereby uniformly dispersing the layered silicate, may also be employed.

In mixing (C) the polyolefin and (D) the impact resistant material with (A) the polyamide resin having uniformly dispersed therein a layered silicate as the component (B), a commonly known melt-kneading machine such as a single or twin-screw extruder, Banbury mixer, kneader and mixing roll is used, and any method, for example, a method of blending all raw materials and then melt-kneading the blend by using a twin-screw extruder, a method of blending and melt-kneading some raw materials and then blending and melt-kneading the remaining raw materials, or a method of blending some raw materials and while melt-kneading the blend, mixing the remaining raw materials by using a side feeder, may be used.

The method of molding a fuel system part from the material for fuel system parts of the present invention is not particularly limited, and parts having various shapes can be produced using a molding machine usually used for a thermoplastic resin, such as extrusion molding machine, blow molding machine, compression molding machine and injection molding machine.

In particular, the material for fuel system parts of the present invention, even when formed in a single layer, can provide sufficiently high impact resistance and alcohol gasoline permeation-preventing property, and therefore, a fuel system part can be easily produced by single-layer injection molding. The "single layer" as used herein means a molded article layer obtained by filling a cavity with a resin composition melted by a single plasticizing apparatus. The injection molding indicates all molding operations of injecting a melted resin into a mold cavity under pressure and solidifying it in the mold to obtain a molded article and includes, for example, injection compression molding as well as normal injection molding.

### EXAMPLES

The present invention is described in greater detail below by referring to Examples and Comparative Examples, but the present invention is not limited to these Examples.

The methods for measuring physical properties of the resin or molded article used in Examples and Comparative Examples are as follows.
(1) Tensile Strength and Elongation:
   A test was performed using a specimen having a thickness of 3.2 mm at ordinary temperature according to ASTM D638.
(2) Flexural Strength and Flexural Modulus:
   A three-point bending test was performed using a strip specimen having a thickness of 6.4 mm at ordinary temperature according to ASTM D790.
(3) Izod Impact Strength:
   A strip specimen having a thickness of 3.2 mm was used and after notching in the post-processing, evaluated by an Izod impact tester at ordinary temperature (23°C) according to ASTM D256.
(4) Deflection Temperature Under Load:
   A specimen having a thickness, a width of 12.7 mm and a length of 127 mm was used and evaluated by an apparatus for the measurement of deflection temperature under load according to ASTM D648.
(5) "Fuel Permeability Constant"

A specimen of φ 100 mm with a thickness of 0.1 mm was molded by injection molding and used according to JIS Z0208. A fuel permeation test was performed using this specimen at a measurement atmosphere temperature of 60°C. The fuel used was prepared by mixing 10% (in terms of volumetric ratio) of ethanol to Fuel C containing isooctane and toluene at a volumetric ratio of 1:1. The test piece for the measurement of fuel permeation was disposed with its permeation surface up to be always in contact with the fuel vapor, and change in the weight was measured every several hours. The change in the weight per day was divided by the cross-sectional area of the specimen to calculate the fuel permeability constant (g·mm/m²·day).
· PA6NCH:
   Layered silicate-containing polyamide 6 resin (1015C2, produced by Ube Industries, Ltd., containing 2 wt% of layered silicate)
· PA6/66NCH:
   Layered silicate-containing polyamide 6/66 resin (5034C2, produced by Ube Industries, Ltd., containing 2 wt% of layered silicate)
· m-EPR
   Maleic acid-modified ethylene propylene rubber (TAFMER MC1307, produced by Mitsui Chemicals, Inc.)
· HDPE
   High-density polyethylene (NOVATEC HD HY333, produced by Japan Polyethylene Corp.)

### Example 1:

The layered silicate-containing polyamide resin, polyolefin and impact resistant material shown in Table 1 were dry-blended and then melt-kneaded in a PCM twin-screw kneader to prepare an objective polyamide resin composition pellet.

The obtained pellet was injection molded at a cylinder temperature of 265°C and a mold temperature of 80°C to produce various specimens, and physical properties thereof were evaluated. The results obtained are shown in Table 1.

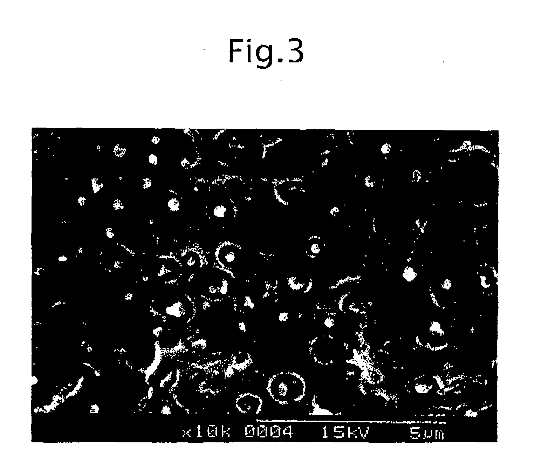

Also, the cross section of the specimen was etched with xylene, Fig. 3 shows the results of the cross-sectional observation through an electron microscope. It was found that m-EPR was removed by etching, a sea phase was formed by PA6, a concentric spherical island phase was formed by m-EPR and HDPE, and the island phase had a particle structure with the outer shell layer being m-EPR and the inner core layer being HDPE.

### Example 2:

A polyamide resin composition pellet was prepared in the same manner as in Example 1 by using the layered silicate-containing polyamide, polyolefin and impact resistant material shown in Table 1.

The obtained pellet was injection molded at a cylinder temperature of 265°C and a mold temperature of 80°C to produce various specimens, and physical properties thereof were evaluated. The results obtained are shown in Table 1.

### Comparative Example 1:

The same layered silicate-containing polyamide resin pellet as in Example 1 was injection molded at a cylinder temperature of 265°C and a mold temperature of 80°C to produce various specimens, and the physical properties thereof were evaluated. The results obtained are shown in Table 1.

### Comparative Example 2:

A polyamide resin composition pellet was prepared in the same manner as in Example 1, except that HDPE was not used in Example 1.

The obtained pellet was injection molded at a cylinder temperature of 265°C and a mold temperature of 80°C to produce various specimens, and the physical properties thereof were evaluated. The results obtained are shown in Table 1.

**Table 1**

| | | | Example | | Comparative Example | |
|---|---|---|---|---|---|---|
| | | | 1 | 2 | 1 | 2 |
| Polyamide | PA6NCH | parts by weight | 75 | 60 | 100 | 75 |
| | PA6/66NCH | parts by weight | - | 15 | - | - |
| Impact resistant material | m-EPR | parts by weight | 15 | 15 | - | 25 |
| Polyolefin | HDPE | parts by weight | 10 | 10 | - | - |
| Tensile strength | | MPa | 52 | 54 | 96 | 64 |
| Elongation | | % | 124 | 160 | 50 | 143 |
| Flexural strength | | MPa | 69 | 74 | 136 | 72 |
| Flexural modulus | | GPa | 2.0 | 2.1 | 3.5 | 2.2 |
| Izod impact strength (notched) | | J/m | 788 | 812 | 47 | 754 |
| Thermal deformation temperature (455 KPa) | | °C | 185 | 183 | 197 | 185 |
| Fuel permeability constant | | g·mm/m²·day | 5.1 | 5.3 | 2.4 | 9.0 |

### INDUSTRIAL APPLICABILITY

The material for fuel system parts of the present invention is applicable to usage in various fuel system parts required to prevent fuel permeation. The usage to which the material is applicable includes parts attached to a fuel tank or a fuel hose, and specific examples thereof include various connectors, filler caps, valves such as control valve, fuel strainers, canisters and separators.

## Claims

1. A material for fuel system parts, comprising a polyamide resin composition which comprises (A) a polyamide resin, (B) a layered silicate, (C) a polyolefin and (D) an impact resistant material and in which (A) the polyamide resin having dispersed therein (B) the layered silicate forms a matrix phase and at the same time, a dispersion phase of a core-shell particle structure with the core being (C) the polyolefin and the shell being (D) the impact resistant material is present in said matrix.

2. The material for fuel system parts as claimed in claim 1, wherein the total content of (A) the polyamide resin and (B) the layered silicate is from 85 to 45 wt%, the content of (C) the polyolefin is from 5 to 20 wt%, and the content of (D) the impact resistant material is from 10 to 35 wt%, based on the entire polyamide resin composition.

3. The material for fuel system parts as claimed in claim 1, wherein the content of (B) the layered silicate is from 0.05 to 10 wt% based on the total of (A) the polyamide resin and (B) the layered silicate.

4. The material for fuel system parts as claimed in claim 1, wherein (B) the layered silicate is uniformly dispersed in (A) the polyamide resin.

5. The material for fuel system parts as claimed in claim 1, wherein (A) the polyamide resin is at least one member selected from polyamide 6 resin, polyamide 6/66 resin and polyamide 12 resin.

6. The material for fuel system parts as claimed in claim 1, wherein (A) the polyamide resin is a blend of polyamide 6 resin and polyamide 6/66 resin.

7. The material for fuel system parts as claimed in claim 1, wherein (C) the polyolefin is a polyethylene or a polypropylene.

8. The material for fuel system parts as claimed in claim 1, wherein (C) the polyolefin is a high-density polyethylene.

9. The material for fuel system parts as claimed in claim 1, wherein (D) the impact resistant material is an acid-modified ethylene-α-olefin copolymer.

10. The material for fuel system parts as claimed in claim 1, wherein the fuel system part is a part attached to a fuel tank or hose.

11. The material for fuel system parts as claimed in claim 1, wherein the fuel is an automobile fuel.

12. A fuel system part using the material for fuel system parts claimed in claims 1 to 9.
